Europäisches Patentamt

European Patent Office

Office européen des brevets

(11) Publication number: **0 622 740 A1**

# EUROPEAN PATENT APPLICATION

(21) Application number: **94104798.7**

(22) Date of filing: **25.03.94**

(51) Int. Cl.5: **G06F 15/20, H04L 29/06**

(30) Priority: **31.03.93 US 40415**

(43) Date of publication of application:
**02.11.94 Bulletin 94/44**

(84) Designated Contracting States:
**DE FR GB**

(71) Applicant: **Hayes Microcomputer Products, Inc.**
**5835 Peachtree Corners East**
**Norcross Georgia 30092 (US)**

(72) Inventor: **Leonard, Leroy Edward, Jr.**
**204 N. Candler Street**
**Decatur, Georgia 30030 (US)**
Inventor: **Murray, Mark Randall**
**214 Tara Trail**
**Atlanta, Georgia 30327 (US)**

(74) Representative: **Patentanwälte Dr. Solf & Zapf**
**Candidplatz 15**
**D-81543 München (DE)**

(54) **Character set translator for data communication networks.**

(57) A character set translator (10) that facilitates the communication of data between computers utilizing different character sets. The computer (16) that utilizes one character set and is transmitting data to a remote terminal (32) that utilizes another character set can invoke the character set translator (10) to convert the data from the original character set to an extended character set (50) that contains characters from around the world. The data is then translated into the character set that is appropriate for the remote terminal (32). Therefore the remote terminal (32) receives a data file encoded in its character set. Likewise, if data is transmitted from a terminal using one character set, the character set translator can receive the data and convert the data into the character set appropriate for the computer or application receiving the data. Look-up tables (60) and (62) are utilized to convert the data between character sets.

Figure 1

**Technical Field**

The present invention relates to the field of data communications, and more particularly, describes a character set translator that facilitates the transfer of data between computers that normally use different character sets, such as those in different countries.

**Background of the Invention**

In the late 1950's, when digital computing machines were first becoming somewhat commonplace, it occurred to those working with computers that it would be desirable to construct an arrangement whereby computers could communicate with each other and whereby operators at a remote operator location could communicate with a distant computer. Today, computers are located throughout the world and users of these computers desire to be interconnected.

Just as with individuals, a fundamental problem with communication across country boundaries is language. Generally speaking, each data communications code utilizes 256 symbols. The conventional use of 256 characters in a character set comes from the fact that 256 distinct symbols is adequate to cover the alphabets of most alphabetic written languages, an appropriate set of punctuation, a set of Arabic numerals, and some standard control codes to be used in certain data communications applications, and still have some additional symbols left over for simple graphic characters that can be used to generate a pleasing text mode display. In the vernacular of this specification, each encoded symbol is referred to as a character. It should be understood that this includes certain distinct control codes, all referred to as "control characters" within a defined computer code.

A computing device engaged in serial data communications merely collects incoming bits and 8 bit asynchronous characters and forwards them onto the application that is driving the communications function. It is up to the programmer to determine the particular coded significance of each 8 bit binary number that is received as an asynchronous character. Also it should be understood that each one to one assignment of the 8 bit binary numbers between 0 and 255 to a particular symbol or control function is a predetermined computer code or a predetermined character set. In the United States, United States - 437 character set has become very popular in the last decade as a result of its use in the IBM PC and the prodigy of that family of computer. Those skilled in the art will recognize United States - 437 character set as a super set of the American Standard Code Information Interchange, which defines a code for the seven least significant bits of a character set. In other words, the ASCII code constitutes 128 of the 256 characters defined by United States - 437.

Computer users in many countries have utilized these 256 characters to represent the locally used alphabet plus various symbols common in their written language such as punctuation. For example, the Greek alphabet contains the letters "$\beta$" and "$\lambda$". The symbols "$\beta$" and "$\lambda$" are represented by the characters "E2" and "EB" in the Greek Windows character set, respectively, expressed as hexadecimal numbers (all characters herein are expressed as hexadecimal numbers). However, of those two symbols, only the "$\beta$" symbol is represented in one common computer character set used in the United States, the Apple Macintosh character set, used in computers sold by Apple Computer, Inc. The "$\beta$" symbol is represented by the "A7" character and the "$\lambda$" symbol does not exist in the Apple Macintosh character set. Therefore, when the "E2" and "EB" characters are received in a computer using the Apple Macintosh character set, the "$\beta$" and "$\lambda$" symbols are not produced. Thus, if a person in Greece were to create a file on a computer in Greece, that file would be created using a code for the Greek character set. If the file were transmitted to a computer in the U.S. that was utilizing the Apple Macintosh character set, most of the Greek characters would be misinterpreted by the receiving terminal.

Another example of a situation in which miscommunication between character sets can occur is transferring files created on one type of operating system to a computer that utilizes a different operating system. For example, Apple Macintosh computers, sold by Apple Computer, Inc., create files using one character set. If a file is transferred from an Apple Macintosh computer to a computer that uses the United States - 437 character set, such as personal computers compatible with the International Business Machine Corporation personal computer, some of the data characters will be misrepresented. For example, the Apple Macintosh open quote (") symbol will be interpreted as a " " line drawing symbol in the United States - 437 character set.

While these unintended translations may at first appear to be simple quirks, their effects can be quite devastating. Consider the situation where a computer program in the United States, using United States - 437 character set, is in communication with a computer program in Norway, where the Multilingual - 850 character set is normally used. Both computers may be involved in the transfer of funds. If the computer in the United States sends a message to the computer in Norway to "buy 1,000,000¥", the user of the United States computer is requesting the purchase of one million Japanese yen. However, if this message is transmitted and immediately displayed on the computer in Norway, the individual in Norway will see the following message "buy 1,000,0000∅". The character representing the symbol for Japanese yen is at different locations in the character sets of each of the computers. Therefore, the computer in Norway erroneously interprets the character sent from the computer using the United States - 437 character set.

Various solutions to this problem have been attempted in the prior art. One solution is to place a message at the front end of a data file that identifies the character set the transmitted data utilizes. When the data is received, and before display, the user can call a program that will translate the data from the original character set to another character set that the computer can display.

The U.S. Patent No. 4,559,614, issued to *Peek et al.*, discloses an interactive code transform system for use in transferring information between computers that have different data protocols and/or formats. In the patent to *Peek et al.*, the operator can select the transform profile of characters. The translation mechanism in the patent is direct character-to-character conversion. The user calls a program that converts data characters in a first format directly into a second format. Specific files are called for conversion from one character set to another.

The U.S. Patent No. 4,956,805, issued to *Biffle et al.*, discloses a translate program. The translation is directly from one code set to a second code set (col. 5, lines 41-62). Up to thirty-two 256-byte translate tables may be stored in memory to allow translation from one code set to another.

However, this presents several additional problems. First, placing a message on the front of each file before transfer increases the file size. Increasing the file size increases the cost of data transfer. A more significant problem, however, is that the user receiving data must continually remember to call a translation program to convert received the data before the data can be displayed. This slows down the user's access to received data. It also makes real time exchange of messages difficult. An additional problem is that the software on both ends of the data communication network must be compatible so that the transmitted terminal puts a message on the file that can be read and understood by the receiving terminal.

Further, it is often desirable to have two computers linked in real time so that what is typed on one computer appears on the remote terminal. Thus, a need yet exists for a system that transfers data in real time between two computers that utilize different character sets, but avoids the mistranslation of characters.

## Summary of the Present Invention

In a computer network in which one computer is connected to a second computer, and wherein said computers utilize first and second character sets at least one of said computers having a character set translator, the improvement in said character set translator being characterized by an extended character set that includes indexed versions of said first and said second character sets, a first look-up table that converts data between said first character set and said extended character set and a second look-up table that converts data between said extended character set and said second character set.

Briefly described, the present invention is a character set translator that facilitates the communication of data between computers utilizing different character sets. The computer that utilizes one character set and is transmitting data to a remote terminal that utilizes another character set can invoke the character set translator to convert the data from the original character set to the character set that is appropriate for the remote terminal. Therefore the remote terminal receives text file written in its character set. Likewise, if data is transmitted from a terminal using one character set to a second terminal using a different character set, the character set translator in the second terminal can translate the received data into the character set appropriate for the computer receiving the data.

More particularly described, the present invention utilizes an extended set of characters for translating data between different character sets. The extended character set contains characters representing symbols used all over the world. The characters in the extended character set are grouped into subsets. Each character in the extended character set is identified by two bytes. The first byte is the subset number in which the character is located. The second byte is an offset into the subset corresponding to the location of the character in the extended character set. Thus, a different two byte character in the extended character set corresponds to each character in the various standard character sets.

Consider an example of how the extended character set is used to translate data. If a computer utilizing one standard character set transmits data to a computer that utilizes a second standard character set, but the computer receiving data practices the character set translation of the present invention, the received data is processed as follows. First, the user of the computer receiving data selects the standard character set used to encode the incoming data (called the "remote character set"). Second, the received data is translated into the extended character set. Therefore, each received data character is converted from one byte of information to two bytes of information. Each two bytes of information is a received data character as translated into the extended character set.

If the received data must be translated into a standard character set used by an application in the receiving computer, the character set translator translates the data from the extended character set to the appropriate standard character set standard (called the "local character set") with a few modifications. When translating data from the extended character set to a standard character set, the translation of each character falls into one of three categories:

(1) Exact Match - the character in the extended character set exists in the standard character set, so the character is directly translated,

(2) Approximate Match - the character in the extended character set does not exist in the standard character set, but a similar character does exist in the standard character set, so the character is translated into the similar character, or

(3) No Match - the character in the extended character set does not exist in the standard character set, nor does any similar character exist in the standard character set, so the character is translated into a question mark "?".

The first category provides direct translation of data from the extended character set to a standard character set. The second category attempts to approximate the data during translation, or if the data cannot be approximated, the third category informs the user that the data cannot be properly translated. Therefore, the user is not confused into thinking that a character has been properly translated when in fact the symbol intended to be communicated cannot be displayed using the standard character set.

Also more particularly described, the present invention uses an extended character set that is comprised of a plurality of standard character sets. The extended character set contains symbols from languages and standard computer codes throughout the world. Therefore, it is not necessary to have a separate translator for each individual language (character set) with which a computer communicates. The present invention will translate data from a number of standard character sets into a different standard character set.

The use of an extended character set provides advantages over the above-referenced prior art patents in which translation occurred directly from a first character set to a second character set. Specifically, the extended character set can be used as the "universal" language if no translator exists between two standard character sets. Also, the extended character set is very useful for "mass translations" wherein one file is converted from a first character set to many other character sets. The file may be simultaneously converted from the extended character set to all the standard character sets, whereas a number of serial translations would be required in a system that translated from the first character set to the second character set.

## Brief Descriptions of the Drawings

Fig. 1 is a block diagram showing the preferred embodiment of the present invention in a data communications environment.

Fig. 2A is an illustration of the transmission of data from a computer using the Multilingual - 850 character set to a computer using the Canadian-French 863 character set wherein the present invention is not employed.

Fig. 2B is an illustration of the transmission and display of data from a computer using the Multilingual - 850 character set to a computer using the Canadian-French 863 character set wherein the present invention is employed.

Fig. 3 is a block diagram of the operation of the present invention, wherein the present invention is translating one standard character set into a second standard character set.

Fig. 4 is the extended character set of the preferred embodiment.

Fig. 5. is a block diagram of the look-up table used to convert data from a standard character set to the extended character set in the preferred embodiment of the present invention.

Fig. 6A is an illustration of the transmission of data from a computer using the Windows Greek character set to the United States - 437 character set wherein the present invention is not employed.

Fig. 6B is an illustration of the transmission of data from a computer using the Windows Greek character set to a computer using the United States - 437 character set wherein the present invention is employed.

## Detailed Description

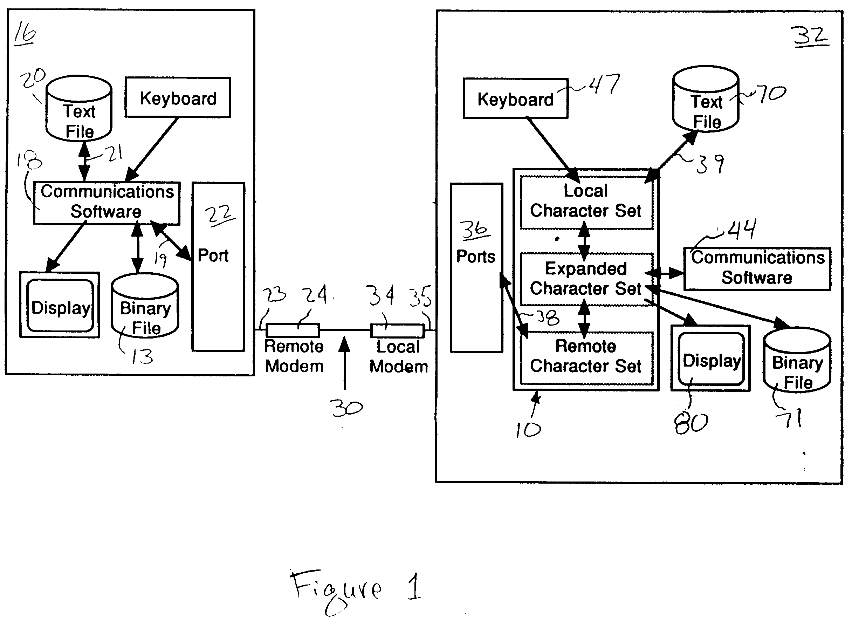

Turning now to the drawings, in which like numerals represent like components throughout the several figures, the preferred embodiment of the present invention will be described. Fig. 1 is a block diagram showing the preferred embodiment of the present invention in a data communications environment. The character set translator 10 is located within computer 32.

The present invention is a method and apparatus for translating data sent from one computer to another computer, wherein the computers are utilizing different character sets. In Fig. 1, computers 16 and 32 are connected over communications links 30 through modems 24 and 34, respectively. The computers 16 and 32 may be any type of computer, such as an Apple Macintosh, sold by Apple Computers, Inc., or an International Business Machines Corporation '486 personal computer, or any clones thereof.

The computers 16 and 32 are interconnected over communications link 30, which normally includes a telephone network. The telephone network may include telephone lines as well as satellite links familiar to those skilled in the art. Modulation and demodulation of information between communications link 30 and computers 16 and 32 is performed by modems 24 and 34, as is well known to those skilled in the art.

Those skilled in the art will recognize that the present invention will function when computers 16 and 32 are interconnected using data communication networks other than the above-described modem and telephone system. For example, in an Integrated Services Digital Network ("ISDN"), synchronous digital data is transferred between computers via multiple time dimension multiplexed ("TDM") channels using terminal adapters (not shown). Character set translator 10 of the present invention will allow the transmission and receipt of data between computers 16 and 32 over an ISDN network, or any other network. Further, the computers 16 and 32 may be directly connected or interconnected in many other manners. Further, those skilled in the art will recognize that the present invention could operate using any data format received on or transmitted from a port of a computer.

In the present discussion of the preferred embodiment, two data transfers over communications link 30 are considered. A brief discussion of how data moves between computers 16 and 32 is set forth. First, the transfer of data from computer 16 to computer 32 is discussed. Second, the transfer of data from computer 32 to computer 16 is described.

Data transferred from computer 16 to computer 32 originates in text file 20. Text file 20 is a memory storage element well known to those skilled in the art. The data stored in text file 20 is to be transferred to computer 32. Communications software 18 initiates data transfer from text file 20. Text file 20 output on data bus 21 is provided to the communications software 18. Communications software 18 adds any headers or footers necessary for error correction, network control etc., all of which is familiar to those skilled in the art. Communications software 18 then outputs data on data bus 19 to the port 22. As is well known to those skilled in the art, communications software 18 provides the control and handshaking signals that facilitate the transfer of the data through communications port 22 on line 23 into modem 24.

Modem 24 is provided to the communications link 30. The data is transmitted across communications link 30 and to modem 34. Modem 34 demodulates the data, as is well known to those skilled in the art, and transfers the data on line 35 to communications port 36. From communications port 36 the data is transferred on data bus 38 to the character set translator 10, which processes the data as will be described below. The data may then be stored in text file 70, stored at another location, transmitted to another computer, printed and/or displayed on display 80. Those skilled in the art will recognize that communications software 44 also processes the data and provides the control and handshaking signals that facilitate the transfer of data through communications port 36.

In the second data communication situation, where data is transmitted from computer 32 to computer 16, the opposite procedure occurs. Data is transferred from text file 70 to character set translator 10 on data bus 39. Character set translator 10 processes the data, utilizing communications software 44, and the data is output on data bus 38 to communications port 36. The data passes from communications port 36 on line 35 through modem 34 over communications link 30 to modem 24. Data is transferred from modem 24 to communications software 18. Communications software 18 processes the data per its communications emulator program and stores the data in text file 20.

The present invention is concerned with the proper transmission and receipt of data when computers 16 and 32 utilize different standard character sets. A character set is the computer equivalent of an alphabet. As is familiar to those skilled in the art, each character in standard character sets is represented by one byte of data. There are 256 possible permutations of a byte of data. Therefore, the standard character set may contain 256 numeric values (called characters) that represent 256 symbols.

An example of one character set is the American Standard Code for Information Interchange ("ASCII") 7- bit character set. There are 128 symbols in the ASCII code, because the ASCII code uses 7 bit characters. The ASCII 7 - bit character set appears as follows:

**ASCII CHARACTER SET (7-BIT CODE)**

| L.S. CHAR | M.S. CHAR → | 0 000 | 1 001 | 2 010 | 3 011 | 4 100 | 5 101 | 6 110 | 7 111 |
|---|---|---|---|---|---|---|---|---|---|
| 0 0000 | | NUL | DLE | SP | 0 | @ | P | ` | p |
| 1 0001 | | SOH | DC1 | ! | 1 | A | Q | a | q |
| 2 0010 | | STX | DC2 | " | 2 | B | R | b | r |
| 3 0011 | | ETX | DC3 | # | 3 | C | S | c | s |
| 4 0100 | | EOT | DC4 | $ | 4 | D | T | d | t |
| 5 0101 | | ENQ | NAK | % | 5 | E | U | e | u |
| 6 0110 | | ACK | SYN | & | 6 | F | V | f | v |
| 7 0111 | | BEL | ETB | ' | 7 | G | W | g | w |
| 8 1000 | | BS | CAN | ( | 8 | H | X | h | x |
| 9 1001 | | HT | EM | ) | 9 | I | Y | i | y |
| A 1010 | | LF | SUB | * | : | J | Z | j | z |
| B 1011 | | VT | ESC | + | ; | K | [ | k | { |
| C 1100 | | FF | FS | , | < | L | \ | l | \| |
| D 1101 | | CR | GS | – | = | M | ] | m | } |
| E 1110 | | SO | RS | . | > | N | ↑ | n | ~ |
| F 1111 | | SI | US | / | ? | O | ← | o | DEL |

Because computers can only transmit and store information that is numerically encoded, each symbol is assigned a numerical value called a character. For example, in ASCII the character "41" (hex) equals the symbol "A". Likewise, the character "42" (hex) equals the symbol "B".

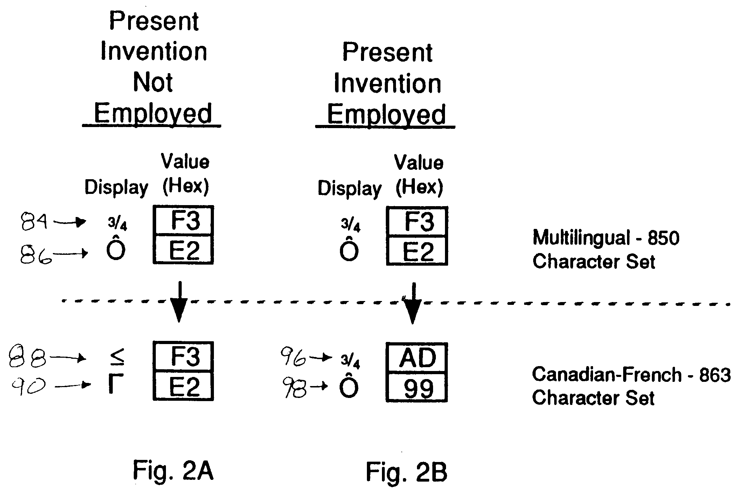

Before addressing the specific operation of the character set translator 10, it is helpful to visualize the problem the present invention addresses. Fig. 2A is an illustration of the transmission of data from a computer using the Multilingual - 850 character set to a computer using the Canadian-French 863 character set. The two symbols shown being transferred are the "3/4" symbol at display 84 and the "Ô" symbol at display 86. The Multilingual - 850 character set character corresponding to the "3/4" symbol at display 86 is "F3", in hexadecimal. The symbol "Ô" is represented by the "E2" character in the Multilingual - 850 character set.

The "F3" character is received in a computer utilizing the Canadian-French 863 character set in Fig. 2A. When the computer utilizing the Canadian-French 863 character set displays or prints the "F3" character, the "≤ " symbol at display 88 results. Likewise, when the "E2" character is printed or displayed using the Canadian-French 863 character set, the "Γ" symbol at display 90 results. The user seeing the mistranslated symbols at displays 88 and 90 is misinformed.

In contrast, Fig. 2B is an illustration of the transmission of data from a computer using the Multilingual - 850 character set to a computer using the Canadian-French 863 character wherein the present invention is employed. The same two symbols, "3/4" and "Ô", are transmitted to the computer using the Canadian-French 863 character set. However, the character set translator 10 in the computer receiving the data receives the two characters and converts them to extended character set 50. Using extended character set 50, the "3/4" and "Ô" symbols are drawn at displays 96 and 98.

There are numerous character sets in use throughout the world. Therefore, the above problem of mistranslation is commonplace. Referring back to Fig. 1, assume that computer 16 is located in Norway and computer 32 is in the United States of America. Naturally, Norwegian is the principal spoken language in Norway whereas English is the most common language in the United States. Written Norwegian is an alphabetic language that includes some characters that are not found in the Roman alphabet that is used to express written English. Similarly, only a subset of the characters of the Roman alphabet are included in the Norwegian alphabet. As a result of this, standard computer codes for representing alpha/numeric characters in Norway include characters that are non-existing in codes commonly used in the United States, and vice a versa. Further, the numeric value for a symbol may be different in Norway from the numeric value for the same symbol in the United States. Two tables are presented below. The first is the Norwegian character set, which is the Multilingual - 850 character set. The second character set is the United States - 437 character set. Upon review of these two character sets, especially the higher order characters, the differences between the character sets are apparent.

**Code page byte to font character (CPF):**

**[850] Multilingual (Latin I)**

Table 1 - Multilingual - 850 Character Set

**Code page byte to font character (CPF):**

Table 2 - United States - 437 Character Set

Presuming that computer 16 is located in Norway and computer 32 is in the United States, text files transmitted from computer 16 will be encoded in the Multilingual - 850 character set (Fig. 1). However, the character set indigenous to computer 32 is the United States - 437 character set, in the preferred embodiment. Because the same numeric values (characters) sometimes represent different symbols in these standard character sets, data communication may be erroneous. However, computer 32 has character set translator 10 to convert data between the two standard character sets. In the preferred embodiment,

7

character set translator 10 is software. The character set translator 10 is loaded in the random access memory of computer 32, although the program may be loaded into any electronic storage device well known to those skilled in the art.

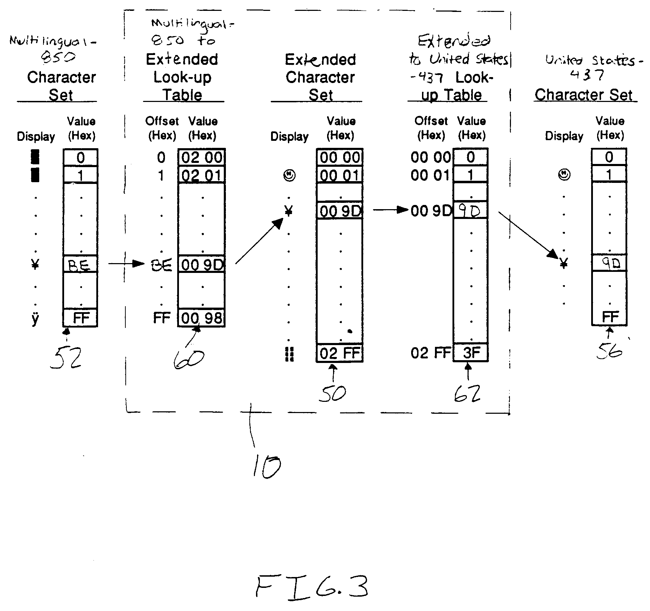

Fig. 3 shows a block diagram of data being converted from the Multilingual - 850 character set of computer 16 to the United States - 437 character set of computer 32. Referring to Fig. 3 and describing the character set translator 10 in detail, the character set translator 10 consists of numerous look-up tables, of which look-up tables 60 and 62 are shown, and the extended character set 50. The character set translator 10 is shown operating on data from the standard character set of table 52 and translating the data into the standard character set of table 56. Data is converted from the standard character set of table 52 to extended character set 50 by look-up table 60, and then the data is converted from extended character set 50 to the standard character set of table 56 by look-up table 62.

Look-up table 60 is loaded with the data needed to translate data from the standard character set in table 52 (Multilingual - 850) to the extended character set 50, and look-up table 62 is loaded with the data needed to translate data from the extended character set 50 to the standard character set in table 56 (United States - 437). The look-up tables 60 and 62 may be stored in any electronic memory devices familiar to those skilled in the art. A different look-up table is used for converting each different standard character set to and from the extended character set 50. Thus, the number of look-up tables equals twice the number of standard character sets that can be translated.

When data is going to be transmitted from computer 16 to computer 32, the user of computer 32 uses keyboard 47 to input commands to the character set translator 10 (Fig. 1). In the preferred embodiment, the character set transfator 10 queries the user as to the standard character set used to encode the incoming data (the "remote standard character set"). The user identifies the standard character set used to encode the incoming data. That character set identifier input by the user is transferred to the character set translator 10. Thus, the user must know, a *priori*, what standard character set was used to encode the incoming data, or the program may query the user as to the type or location of the transmitting computer, i.e. - Norway, Greece, Macintosh. This information can be used to derive which standard character set was used to encode the incoming data.

The character set translator 10 uses the character set identifier input by the user to select look-up table 60 from among all the look-up tables stored in memory (Fig. 3). In the present case, the user identifies the incoming data as being encoded in the Multilingual - 850 character set. Look-up table 60 is selected because it translates the Multilingual - 850 character set into the extended character set 50.

After look-up table 60 is selected as the appropriate look-up table to translate the incoming data, each incoming data character is used as an offset into look-up table 60. The incoming data characters are thus used as offsets to retrieve the proper extended character set character from look-up table 60.

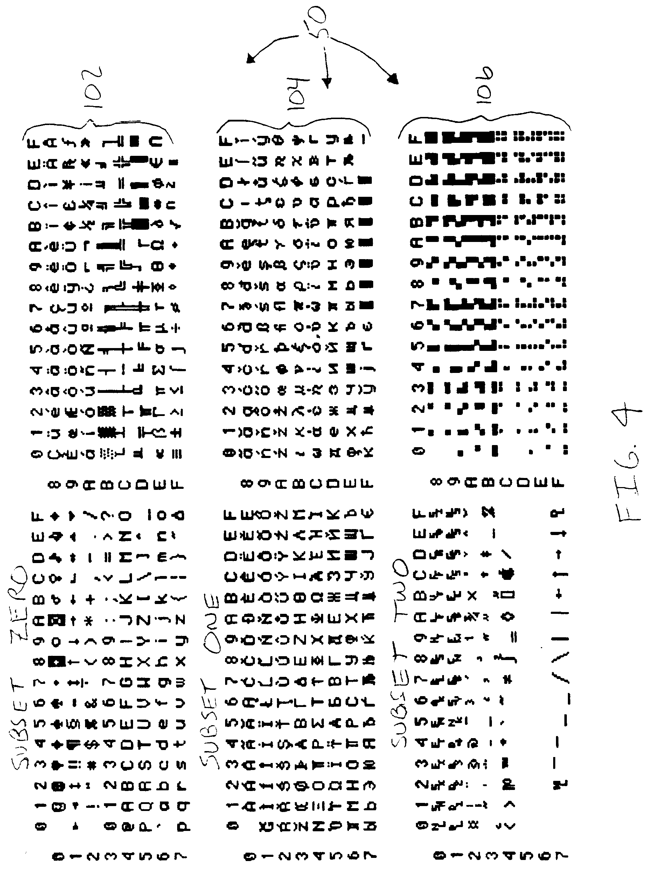

If, for example, computer 32 received the character "BE" from computer 16, the look-up table 60 offset is "BE" (Fig. 3). In the Multilingual - 850 character set the "BE" character corresponds to the symbol "¥" (Japanese yen sign), as seen in the display column next to table 52. In the extended character set 50 the "¥" symbol corresponds to subset zero 102, character "9D" (Figs. 3 and 4). When the data character "BE" is used as an offset into look-up table 60, the look-up table outputs the character "009D", where the digits "00" indicate subset zero 102 (Fig. 4) within the extended character set 50, and "9D" is the offset into subset zero for the "¥" symbol. The character "009D" in the extended character set represents the "¥" symbol. Thus, data characters are translated from the Multilingual - 850 character set to the extended character set 50 (Fig. 3).

The extended character set 50 of the preferred embodiment is set forth in Fig. 4. Fig. 4 is a listing of the characters associated with all the symbols in the extended character set 50. For example, the symbol "3/4" corresponds to the character "2A" in subset two 106 of extended character set 50. Extended character set 50 includes symbols from numerous standard character sets, including United States - 437, Multilingual - 850, Apple Macintosh, Portugal, Windows ANSI and Nordic 865. Thus, every symbol in these standard character sets can be found in the extended character set 50.

It is often the case that the received data must be converted from the extended character set 50 back into a standard character set. Indeed, most programs that need to utilize the received data can only manipulate one byte of data per character using one standard character set. When the translated data is to be used by such a program, the extended character set two byte format cannot be used. The data must be translated back into a one byte per character standard character set, as is done by look-up table 62 shown in Fig. 3.

The data must be transferred to a word processing program that uses the United States - 437 character set shown in table 56. Therefore, the data encoded using the extended character set 50 must be translated into the United States - 437 character set.

The character set translator 10 may either query the user as to the standard character set into which data is to be translated, or the standard character set can be assumed based on the program that is receiving the data. Again, in the case shown in Fig. 3, data is being converted from the extended character set 50 to the United States - 437 character set shown in table 56.

To translate data from the extended character set 50 to the standard character set in table 56, the look-up table 62 is utilized. Look-up table 62 is structured and functions similarly to look-up table 60, except that the offsets are two bytes and the data values are single bytes.

Following the transfer of data through Fig. 3, the "009D" character from extended character set 50 is used as an offset into look-up table 62. The offset "009D" in look-up table 62 addresses the character "9D". The character "9D", output from look-up table 62, represents the "¥" symbol in the United States - 437 character set. Thus, the "¥" symbol was successfully taken from the Multilingual - 850 character set of table 52 passed through the character set translator 10 and translated into the United States - 437 character set of table 56. Computer 16 thus successfully transferred data to computer 32 despite the fact that computer 16 and 32 use different character sets.

Those skilled in the art will recognize that other means for translating data could be utilized, such as using different addressing schemes. However, these variations would be within the scope and spirit of the present invention. Further, the extended character set 50 could contain 65,536 characters, thereby increasing the number of character sets that could be translated. The number of look-up tables can also be increased to translate additional standard character sets.

Those skilled in the art will know that data translated into the extended character set may be stored in binary file 71 (Fig. 1). The extended character set data is stored in binary file 71, instead of text file 70, because text files do not accommodate two byte data characters. On a similar note, the character set translator 10 would not be employed to convert data transferred from the binary file 13 in computer 16 to computer 32, because such a binary file may have already been translated, or the binary file may be an executable file. Thus, using character set translator 10 would destroy the data.

Those skilled in the art will also recognize that it would sometimes be desirable to display data encoded using the extended character set 50. The computer 32 in the preferred embodiment is an International Business Machines Corp. personal computer, such as the '486 computers, utilizing the Windows Operating System sold by Microsoft Corporation. To display a symbol on display 80 (Fig. 1), a Windows font character is created for each character in each subset within the extended character set 50. Each Windows font file (not shown) contains the data needed to store 256 symbols. Thus, three Windows font files, each corresponding to one of the three subsets within extended character set 50, contain the data necessary to display 758 symbols, or every symbol in extended character set 50. In the preferred embodiment, each symbol in extended character set 50 is bit-mapped and the bit-map for each symbol is stored in one of three Windows font files. Windows font files are stored in a memory storage device familiar to those skilled in the art. Each character representing a symbol to be displayed, such as the "009D" character discussed above, addresses font data in a font file. The "00" portion of the character addresses the first font file. The "9D" portion of the character addresses the bit-map data at address "9D" in the third font file that will be output to produce the "¥" symbol on display 80. As can be seen, the bit-map data in the first font file corresponds to the characters in subset zero 102 of extended character set 50 (Fig. 4). Likewise, addressing for subsets two 104 and three 106 of extended character set 50 correspond to bit-map data stored in the second and third Windows font files, respectively. Thus, data encoded using the extended character set 50 may be displayed.

In the above example, translation of incoming data in a computer receiving data is described. However, if data is transmitted from computer 32 to computer 16, the data must be translated to the standard character set used by the receiving computer 16 before transmission (Fig. 1). Because the receiving computer 16 does not have a character set translator 10, it cannot receive and translate incoming data. By translating data within computer 32 before transmission, the data sent to computer 16 is encoded using the standard character set computer 16 uses. Thus, miscommunication and mistranslation do not occur.

Using keyboard 47, the user of computer 32 inputs a character set identifier that indicates the standard character set to which data will be translated (Fig. 1). Alternatively, the character set translator 10 may assume data is to be converted to the standard character set that the last batch of data that was transmitted was translated into. Such an assumption performs well when computers are communicating in real time. Those skilled in the art will recognize many means for informing the character set translator 10 of the standard character set to which data will be translated.

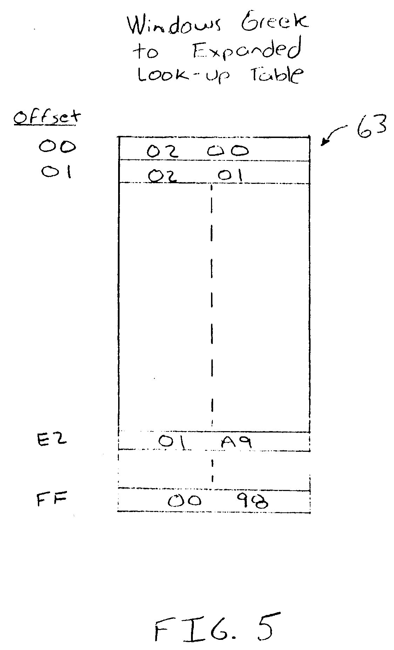

To provide a more detailed example, consider that computer 32 is in Greece and computer 16 is in the United States. The computer 32 in Greece is using the Windows Greek character set, and the computer 16 in the United States is using the United States - 437 code page. Two steps must be taken to translate the data. First, the data is translated from the Windows Greek character set. Fig. 5 shows look-up table 63 used to translate data from the Windows Greek character set to extended character set 50, and the translation is performed as discussed above regarding look-up table 60. Specifically, the Windows Greek character set data characters are used as offsets in look-up table 63 to address and output the corresponding extended character set data characters.

Second, the data must be translated from the extended character set 50 to the United States - 437 character set. The character set translator 10 uses the character set identifier to select look-up table 62 from among all the look-up tables. As was set forth in the prior example, look-up table 62 is the look-up table used for translating data from the extended character set 50 into the United States - 437 character set. Look-up table 62 operates as was described above. Thus, data output from computer 32 in Greece is encoded using the United States - 437 character set and computer 16 receives data encoded using its standard character set.

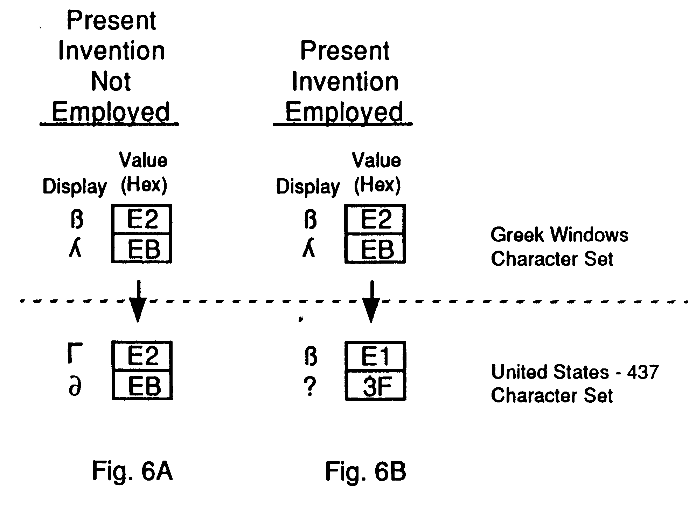

There are some circumstances when the character set translator 10 may need to translate data from the extended character set 50 into a standard character set, but wherein the character cannot be translated. The transmission of data from computer 32 in Greece to computer 16 provides such a circumstance, and Figs. 6A and 6B illustrate the problem and the solution.

Fig. 6A illustrates the transmission of data from computer 32, which is using the Windows Greek character set, to computer 16, which is using the United States - 437 character set, wherein the character set translator 10 is not used. The "$\beta$" and "$\lambda$" symbols would be transmitted from Greece as the characters "E2" and "EB", respectively. When the computer 16 in the United States, using the United States - 437 character set, receives "E2" and "EB", the "Γ" and "$\delta$" symbols, respectively, are erroneously displayed.

There are some Greek characters that are not found within the 256 character United States - 437 character set. There simply are no exact characters for the "$\beta$" and "$\lambda$" symbols in the United States - 437 character set. Therefore, there can be no direct translation of the data.

The look-up table 62, however, must attempt to translate the symbols from the extended character set 50 into the United States - 437 character set. Referring to Fig. 6B, two solutions are used in the present invention to solve this quandary. First, if there is a character in the United States - 437 character set that appears similar to the "$\beta$" or "$\lambda$" symbols, that symbol can be transmitted. The "ß" symbol (German sharp s), available in the United States - 437 character set, could be, and is, substituted for the "$\beta$" symbol that is not available in the United States - 437 character set. This procedure occurs as follows. The look-up 62 receives the character "01A9", the extended character set character for the "$\beta$" symbol. The "01A9" offset of look-up table 62 contains the "E1" character. "E1" is the character in the United States - 437 character set for the "ß" symbol. Thus, the "E1" character is output from look-up table 62 to computer 16. The German sharp s symbol "ß" is thus substituted for the Greek beta symbol "$\beta$". This approximation of symbols is achieved by loading the look-up table 62 with data characters that approximate data characters that are to be translated, when the data characters to be translated are not found in the standard character set.

Alternatively, the "?" symbol could be output when a character is not found in a standard character set. The "$\lambda$" symbol does not exist, nor is there a similar symbol, in the United States - 437 character set. When the "01B2" character (representing the "$\lambda$" symbol) is received at look-up table 62, the value at offset "01B2" is "3F" - the character for the "?" symbol. Thus, the "?" symbol would be transmitted to computer 16 in place of the "$\lambda$" symbol. By converting characters not in the standard character set into the character for the "?" symbol the user is informed of the translation problem.

Whether the look-up table 62 is modified to output a symbol approximating another symbol or is programmed to output a "?" symbol is a choice of the programmer of look-up table 62. In the preferred embodiment, the character for the "?" symbol is output when the character for the "$\lambda$" symbol is translated from the extended character set 50 to the United States - 437 character set.

From the above, it will be appreciated that the present invention provides an apparatus that translates data from one standard character set to a different standard character set during data communications between computers. From the above detailed descriptions and accompanying drawings, numerous modifications, alternations and alternative embodiments of the present invention will become apparent to those skilled in the art. Therefore, the present invention is to be limited only by the claims below and equivalents thereof.

## Claims

1. In a computer network in which one computer (16) is connected to a second computer (32), and wherein said computers utilize first and second character sets (52) and (56) at least one of said computers having a character set translator, the improvement in said character set translator being characterized by an extended character set (50) that includes indexed versions of said first and said second character sets, a first look-up table (60) that converts data between said first character set (52) and said extended character set (50) and a second look-up table (62) that converts data between said extended character set (50) and said second character set (56).

2. The method of Claim 1 wherein said data is transmitted from a computer (16) that uses said first standard character set and received by a computer (32) that uses said standard second character set, and said translations of data occur after said data is received by said computer (32) that uses said second standard character set.

3. The method of Claim 1 wherein said data is transmitted from a computer (16) that uses said first standard character set and received by a computer (32) that uses said second standard character set, and said translations of data occur before said data is transmitted by said computer (16) that uses said first standard character set.

4. The method of Claim 1 wherein said extended character set (50) utilizes two bytes of data to identify each character, one byte of data being a subset number within said extended character set (50) and the second byte of data being an offset into the subset within said extended character set (50).

5. A method for translating data coming into a computer encoded in a first standard character set into a second standard character set, comprising the step of identifying the first standard character set used to encode the incoming data and the second standard character set to which the data will be converted, the improvement in the method for translating data comprising the steps of translating said incoming data from said first standard character to an extended character set, said extended character set including said first standard character set and said second standard character set and translating said data translated into said extended character set from said extended character set to said second standard character set.

6. The method of Claim 5 wherein said translation steps are performed using two separate look-up tables, said incoming data characters being used to address a first look-up table and said first look-up table outputting stored characters from the extended character set that correspond to said incoming data characters, thereby performing the translation of said incoming data from said first standard character set to an extended character set and said first look-up table output being used to address a second look-up table and said second look-up table outputting stored characters from said second standard character set that correspond to said incoming data characters, thereby performing the translation of said data from said extended character set to said second character set.

7. The method of Claim 5 wherein characters from said first standard character set which are not in said second standard character set are approximated using similar characters from said second standard character set.

Figure 1

Present Invention Not Employed

Present Invention Employed

Display | Value (Hex)  Display | Value (Hex)

84 → ¾ | F3  ¾ | F3
86 → Ô | E2  Ô | E2  Multilingual - 850 Character Set

88 → ≤ | F3  96 → ¾ | AD
90 → Γ | E2  98 → Ô | 99  Canadian-French - 863 Character Set

Fig. 2A          Fig. 2B

EP 0 622 740 A1

Multilingual-850 to Extended Look-up Table | Extended Character Set | Extended to United States-437 Look-up Table (dashed box 10)

| Multilingual-850 Character Set | | Multilingual-850 to Extended Look-up Table | | Extended Character Set | | Extended to United States-437 Look-up Table | | United States-437 Character Set | |
|---|---|---|---|---|---|---|---|---|---|
| Display | Value (Hex) | Offset (Hex) | Value (Hex) | Display | Value (Hex) | Offset (Hex) | Value (Hex) | Display | Value (Hex) |
| ■ | 0 | 0 | 02 00 | | 00 00 | 00 00 | 0 | | 0 |
| ■ | 1 | 1 | 02 01 | ☺ | 00 01 | 00 01 | 1 | ☺ | 1 |
| . | . | . | . | | . | . | | . | . |
| . | . | . | . | ¥ | 00 9D | 00 9D | 9D | . | . |
| . | . | . | . | . | . | . | . | . | . |
| ¥ | BE | BE | 00 9D | . | . | . | . | ¥ | 9D |
| . | . | . | . | . | . | . | . | . | . |
| ÿ | FF | FF | 00 98 | . | . | . | . | | FF |
| | | | | ‖ | 02 FF | 02 FF | 3F | | |

52    60    50    62    56

10

FIG.3

FIG. 4

Windows Greek
to Expanded
Look-up Table

Offset

FIG. 5

EP 0 622 740 A1

EP 0 622 740 A1

Present
Invention
Not
Employed

Present
Invention
Employed

| Display | Value (Hex) | | Display | Value (Hex) | |
|---|---|---|---|---|---|
| ß | E2 | | ß | E2 | Greek Windows |
| ⅄ | EB | | ⅄ | EB | Character Set |

| Γ | E2 | | ß | E1 | United States - 437 |
|---|---|---|---|---|---|
| ∂ | EB | | ? | 3F | Character Set |

Fig. 6A          Fig. 6B

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | IBM TECHNICAL DISCLOSURE BULLETIN., vol.24, no.10, March 1982, NEW YORK US pages 4988 - 4990 'Dynamic Keyboard Translation During Communication Between Terminals' * the whole document * | 1-7 | G06F15/20 H04L29/06 |
| A | US-A-5 166 928 (IZEZAKI ET AL.) 24 November 1992 * abstract * | 1-7 | |
| A | US-A-4 858 114 (HEATH ET AL.) 15 August 1989 * abstract * | 1-7 | |
| A | IBM TECHNICAL DISCLOSURE BULLETIN., vol.26, no.11, April 1984, NEW YORK US page 5931 'Dynamic Switching of Computer Keyboards' * the whole document * | 1-7 | |

**TECHNICAL FIELDS SEARCHED (Int.Cl.5)**

G06F
H04L

The present search report has been drawn up for all claims

| Place of search | Date of completion of the search | Examiner |
|---|---|---|
| THE HAGUE | 13 July 1994 | Goossens, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)